# EUROPÄISCHE PATENTSCHRIFT

(11) **EP 0 633 888 B1**
(45) Veröffentlichungstag und Bekanntmachung des Hinweises auf die Patenterteilung: **16.10.1996**
(21) Anmeldenummer: 93906587.6
(22) Anmeldetag: 23.03.1993
(51) Int. Cl.: C07F 9/54, C25D 3/12

(54) **PHOSPHONIUMSALZE UND IHRE VERWENDUNG ALS GLANZMITTEL FÜR WÄSSRIG-SAURE GALVANISCHE NICKELBÄDER**
PHOSPHONIUM SALTS AND THEIR USE AS BRIGHTENERS FOR AQUEOUS-ACID GALVANIC NICKEL BATHS
SELS DE PHOSPHONIUM ET LEUR UTILISATION COMME AGENT DE BRILLANTAGE POUR DES BAINS ELECTROLYTIQUES DE NICKEL AQUEUX ACIDES

(30) Priorität: 03.04.1992 DE 4211140
(43) Veröffentlichungstag der Anmeldung: 18.01.1995
(73) Patentinhaber: BASF Aktiengesellschaft, 67063 Ludwigshafen (DE)
(72) Erfinder: BURKHART, Bernd, D-6704 Mutterstadt (DE); OFTRING, Alfred, D-6702 Bad Duerkheim (DE); SCHWENDEMANN, Volker, D-6730 Neustadt (DE); GLASER, Klaus, D-6800 Mannheim 1 (DE)
(86) Internationale Anmeldenummer: EP9300695
(87) Internationale Veröffentlichungsnummer: WO9320087

(56) Entgegenhaltungen:
- DE-A- 2 204 326
- FR-A- 1 535 554
- FR-A- 2 310 424
- GB-A- 1 102 064
- GB-A- 2 080 810
- US-A- 3 654 342
- US-A- 3 689 601
- US-A- 3 804 950
- US-A- 3 852 419
- US-A- 4 076 600
- HELVETICA CHIMICA ACTA, Band 50, Nr. 102, 1967, P.A. CHOPARD, Seiten 1016-1021
- JOURNAL OF THE CHEMICAL SOCIETY & CHEMICAL COMMUNICATIONS, Band 8, 1976; H. KISE et al., Seiten 299-300
- ANTI-CANCER DRUG DESIGN, Band 4, Nr. 4, 1989, Macmillan Press Ltd.; D.C. RIDEOUT et al., Seiten 265-280
- JOURNAL OF THE AMERICAN CHEMICAL SOCIETY, Band 90, Nr. 10, 08 Mai 1968; S. MASAMUNE et al., Seiten 2728-2729
- TETRAHEDRON LETTERS, Band 29, Nr. 22, 1988, Pergamon Press plc, (GB); J.K.T. MATIKAINEN et al., Seiten 2685-2688
- CHEMICAL ABSTRACTS, Band 101, 1984, Columbus, OH (US); Seite 621, Nr. 23724g

## Beschreibung

Die vorliegende Erfindung betrifft die Verwendung von Phosphoniumsalzen als Glanzmittel für wäßrig-saure galvanische Nickelbäder.

Es ist bekannt, daß saure Nickelelektrolyte in geringer Menge organische Substanzen enthalten müssen, wenn bei der galvanischen Nickelabscheidung eine glänzende, duktile und an der Oberfläche ebene Abscheidung des Metalls erzielt werden soll. Derartige Glanzmittel, die man in der Regel in primäre Glanzmittel ("Glanzträger") und sekundäre Glanzmittel ("Glanzbildner") unterteilt, werden üblicherweise als Kombination aus mehreren dieser Mittel eingesetzt, um die Wirkung zu steigern.

In der Literaturstelle "Praktische Galvanotechnik", Eugen G. Lenze Verlag, Saulgau, 4. Auflage 1984, Seite 268 bis 271 (1) werden Substanzklassen für übliche Glanzmittel für Nickelelektrolyte beschrieben. Eine Einteilung in primäre und sekundäre Glanzmittel und Einebner wird zwar getroffen, es wird aber gleichzeitig darauf hingewiesen, daß diese Einteilung nicht immer eindeutig vorgenommen werden kann. Als glanzerzeugende Substanzklassen werden genannt:
- Sulfonimide, z.B. Benzoesäuresulfimid
- Sulfonamide
- Benzolsulfonsäuren, z.B. Mono-, Di- und Tribenzolsulfonsäure
- Naphthalinsulfonsäuren, z.B. Mono-, Di- und Trinaphthalinsulfonsäure
- Alkylsulfonsäuren
- Sulfinsäure
- Arylsulfonsulfonate
- aliphatische Verbindungen mit Ethylen- und/oder Acetylenbindungen, z.B. Butindiol
- ein- und mehrkernige stickstoffhaltige Heterocyclen, welche noch weitere Heteroatome wie Schwefel oder Selen enthalten können
- Cumarin
- Amine und quaternäre Ammoniumverbindungen als Einebnungsmittel
- Saccharin.

In der DE-B 11 91 652 (2) werden ein- oder mehrkernige heterocyclische Stickstoffbasen vom aromatischen Typ in quaternisierter Form wie Pyridiniumsalze, z.B. 2-Pyridinium-1-sulfatoethan, als Einebnungsmittel, d.h. Glanzmittel, für saure galvanische Nickel; bäder beschrieben. Diese Mittel werden zusammen mit üblichen Grundglanzmitteln wie Benzol-m-disulfonsäure, Diaryldisulfimiden oder Sulfonamiden verwendet.

Aus der US-A 4 076 600 (3) sind wäßrig-saure Zinkelektrolyt-Bäder bekannt, welche Phosphonium-Kationen der Formel R₄P^{⊕} enthalten, in der die Reste R für Hydroxyalkylgruppen stehen.

In der Praxis werden üblicherweise als Glanzbildner Alkenylsulfonsäuren wie Natriumvinylsulfonat oder Natriumallylsulfonat in Kombination mit anderen Glanzbildnern wie Propargylalkohol, 2-Butin-1,4-diol, Propinsulfonsäure oder 3-Pyridinium-propylsulfonat verwendet.

Nachteilig bei den aus dem Stand der Technik bekannten Mitteln ist allerdings die in der Regel relativ hohe Einsatzkonzentration in den verwendeten Nickelelektrolyt-Bädern.

Der Erfindung lag daher ein verbessertes Verfahren zur Herstellung vernickelter Formteile unter Verwendung von Glanzbildnern, die bei besserer oder zumindest gleicher Glanzbildung wie bei beispielsweise 2-Pyridinium-1-sulfatoethan oder 3-Pyridiniumpropylsulfonat in geringerer Konzentration eingesetzt zu werden brauchen, als Aufgabe zugrunde.

Demgemäß wurde ein Verfahren zur Herstellung vernickelter Formteile durch galvanisches Abscheiden von Nickel aus wäßrig-sauren Bädern, die als wesentliche Bestandteile ein oder mehrere Nickelsalze, eine oder mehrere anorganische Säuren und ein oder mehrere Glanzmittel enthalten, gefunden, welches dadurch gekennzeichnet ist, daß man als Glanzmittel Phosphoniumsalze der allgemeinen 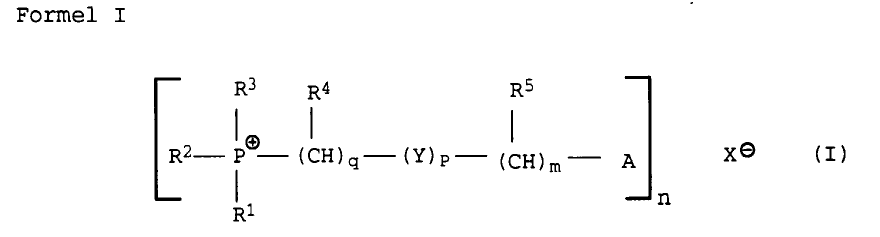 in der
- R¹ bis R³: C₁- bis C₁₈-Alkyl, welches durch Carboxylgruppen, C₁- bis C₄-Alkoxycarbonylgruppen oder Cyanogruppen substituiert sein kann, C₂- bis C₁₂-Alkenyl, C₂- bis C₁₂-Alkinyl, C₅- bis C₈-Cycloalkyl, C₇- bis C₁₂-Phenylalkyl, Phenyl, welches durch ein oder zwei C₁- bis C₄-Alkylreste, C₁- bis C₄-Alkoxyreste, Halogenatome, Hydroxylgruppen, Phenylreste oder C₁- bis C₄-Alkoxycarbonylgruppen substituiert sein kann, oder Mono- oder Di(C₁- bis C₄-alkyl)amino bedeuten,
- R⁴ und R⁵: für Wasserstoff oder C₁- bis C₄-Alkyl stehen,
- A: Wasserstoff oder eine Gruppierung der Formel -CO-H, -CO-R⁶, -CO-OH, -CO-OR⁶, -CO-CH₂-CO-OR⁶, -O-CO-H, -O-CO-R⁶, -OR⁶, -SO₂-R⁶, -SO₂-OH, -SO₂-OR⁶, -PO(OH)₂, -PO(OH) (OR⁶), -PO(OR⁶)₂, -OPO (OH)₂, -OPO (OH) (OR⁶) oder -OPO(OR⁶)₂ bezeichnet, wobei
- R⁶: C₁- bis C₁₂-Alkyl, C₂- bis C₁₂-Alkenyl, C₂- bis C₁₂-Alkinyl, C₅- bis C₈-Cycloalkyl, C₇- bis C₁₂-Phenylalkyl oder Phenyl, welches durch ein oder zwei C₁- bis C₄-Alkylreste, C₁- bis C₄-Alkoxyreste, Halogenatome, Hydroxylgruppen, Phenylreste oder C₁- bis C4-Alkoxycarbonylgruppen substituiert sein kann, bedeutet,
- Y: die Gruppierung -CH=CH- oder -C≡C- bezeichnet,
- m: für eine Zahl von 0 bis 10,
- n: für eine Zahl von 1 bis 4,
- p: für 0 oder 1 und
- q: für eine Zahl von 0 bis 10 stehen und
- X^{⊖}: ein n-wertiges anorganisches oder organisches Anion, welches die Wasserlöslichkeit fördert, bezeichnet,
einsetzt.

Als C₁- bis C₄-Alkylreste für R⁴ und R⁵ und am Phenylkern kommen n-Propyl, iso-Propyl, n-Butyl, iso-Butyl, sec.-Butyl, tert.-Butyl und vor allem Methyl und Ethyl in Betracht.

Als geradkettige oder verzweigte C₁- bis C₁₈- bzw. C₁- bis C₁₂-Alkylreste für R¹ bis R³ und R⁶ bis R⁸ kommen beispielsweise neben der oben aufgeführten C₁- bis C₄-Alkylresten n-Amyl, iso-Amyl, sek.-Amyl, tert.-Amyl, Neopentyl, n-Hexyl, n-Heptyl, n-Octyl, 2-Ethylhexyl, n-Nonyl, iso-Nonyl, n-Decyl, n-Undecyl, n-Dodecyl, n-Tetradecyl, n-Hexadecyl und n-Octadecyl in Betracht. Bevorzugt werden hiervon C₁- bis C₄-Alkylreste.

Als durch Carboxylgruppen, C₁- bis C₄-Alkoxycarbonylgruppen oder Cyanogruppen substituiertes C₁- bis C₁₈-Alkyl für R¹ bis R³ eignet sich beispielsweise 2-Carboxyethyl, 2-(Methoxycarbonyl)ethyl, 2-(Ethoxycarbonyl)ethyl oder 2-Cyanoethyl.

Als C₅- bis C₈-Cycloalkylreste für R¹ bis R³ und R⁶ bis R⁸ kommen insbesondere Cyclopentyl, Cyclohexyl, Cycloheptyl, Cyclooctyl, Methylcyclopentyl, Dimethylcyclopentyl, Methylcyclohexyl, Dimethylcyclohexyl und Ethylcyclohexyl in Betracht. Bevorzugt werden hiervon Cyclopentyl und Cyclohexyl.

Als C₇- bis C₁₂-Phenylalkylgruppen für R¹ bis R³ und R⁶ bis R⁸ eignen sich beispielsweise 1-Phenylethyl, 2-Phenylethyl, 1-Phenylpropyl, 2-Phenylpropyl, 3-Phenylpropyl, 2-Phenylprop-2-yl, 4-Phenylbutyl, 2,2-Dimethyl-2-phenylethyl, 5-Phenylamyl, 6-Phenylhexyl und vor allem Benzyl.

Bei Verwendung monosubstituierter Phenylreste für R¹ bis R³ und R⁶ bis R⁸ ist das Substitutionsschema ortho, meta oder vorzugsweise para, bei disubstituierten Phenylresten stehen die Substituenten vor allem in 2,4-Position, z.B. bei 2,4-Xylyl. Es wird bei Vorhandensein von Substituenten ein Substitionsgrad von 1 bevorzugt. Besonders bevorzugt wird jedoch unsubstituiertes Phenyl.

Als C₁- bis C₄-Alkoxyreste kommen insbesondere Methoxy und Ethoxy, daneben aber auch n-Propoxy, iso-Propoxy, n-Butoxy, iso-Butoxy, sec.-Butoxy und tert.-Butoxy in Betracht.

Als C₁- bis C₄-Alkoxycarbonylgruppen dienen beispielsweise n-Propoxycarbonyl, iso-Propoxycarbonyl, n-Butoxycarbonyl, iso-Butoxycarbonyl, sec.-Butoxycarbonyl, tert.-Butoxycarbonyl, vor allem aber Ethoxycarbonyl und Methoxycarbonyl.

Der Begriff Halogenatom umfaßt hierbei Fluor, Jod, vor allem aber Brom und insbesondere Chlor.

Als geradkettige oder verzweigte C₂- bis C₁₂-Alkenylreste für R¹ bis R³ und R⁶ bis R⁸ eignen sich z.B. Vinyl, Allyl, Methallyl, 3-Butenyl, 4-Pentenyl, 5-Hexenyl, 7-Octenyl, 9-Decenyl, 11-Dodecenyl, Citronellolyl, Geraniolyl oder Linaloolyl.

Als geradkettige oder verzweigte C₂- bis C₁₂-Alkinylreste für R¹ bis R³ und R⁶ bis R⁸ eignen sich z.B. Ethinyl oder 2-Propinyl.

Als Mono- oder Di(C₁- bis C₄-alkyl)amino für R¹ bis R³ kommt z.B. Methylamino, Dimethylamino, Ethylamino, Diethylamino, n-Butylamino oder Di-n-butylamino in Betracht.

Die Reste R⁴ und R⁵ stehen vorzugsweise für Wasserstoff, Methyl oder Ethyl, insbesondere für Wasserstoff.

m steht vorzugsweise für eine Zahl von 0 bis 8, insbesondere 0 bis 5, ganz besonders 0 bis 3.

q steht vorzugsweise für eine Zahl von 0 bis 5, insbesondere für 1.

Als n-wertige Anionen X kommen die üblichen, normalerweise die Wasserlöslichkeit fördernden anorganischen oder organischen Anionen in Betracht, so vor allem Chlorid, Bromid, Fluorid, Sulfat, Hydrogensulfat, Methansulfonat, Trifluormethansulfonat, 2-Hydroxyethansulfoant, p-Toluolsulfonat, Nitrat, Tetrafluorborat, Perchlorat, 1-Hydroxyethan-1,1-diphosphonat, Dihydrogenphosphat, Hydrogenphosphat, Phosphat, Formiat, Acetat, Oxalat, Citrat und Tartrat.

Hiervon werden ein- oder zweifach (n=1 oder 2) geladene Anionen, vor allem Fluorid, Sulfat, Methansulfonat, Nitrat und Tetrafluoroborat, insbesondere jedoch Chlorid und Bromid bevorzugt.

Bedeutet die Variable A eine Carbonsäure-, Sulfonsäure-, Phoshonsäure- oder Phosphorsäure-Funktion, können die Phosphoniumsalze I auch als Betaine vorliegen, die durch Abspaltung von HX aus den Phosphoniumsalzen entstehen können.

In einer bevorzugten Ausführungsform werden Phosphoniumsalze I eingesetzt, bei denen die Variablen R¹ bis R³ C₁- bis C₄-Alkyl oder Phenyl, welches durch ein oder zwei C₁- bis C₄-Alkylreste substituiert sein kann, bedeuten. Insbesondere bedeuten R¹ bis R³ unsubstituiertes Phenyl.

In einer weiteren bevorzugten Ausführungsform werden Phosphoniumsalze der allgemeinen Formel Ia 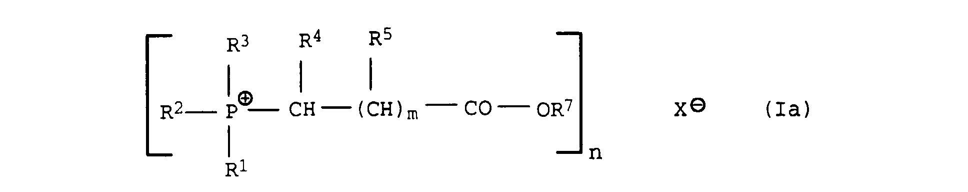 in der die Variablen R¹ bis R⁵, m, n und X^{⊖} die oben genannten Bedeutungen haben und R⁷ Wasserstoff, C₁- bis C₁₂-Alkyl, C₂- bis C₁₂-Alkenyl, C₂- bis C₁₂-Alkinyl, C₅- bis C₈-Cycloalkyl, C₇- bis C₁₂-Phenylalkyl oder Phenylalkyl oder Phenyl, welches durch ein oder zwei C₁- bis C₄-Alkylreste substituiert sein kann, bedeutet, eingesetzt.

In einer weiteren bevorzugten Ausführungsform werden Phosphoniumsalze der allgemeinen Formel Ib 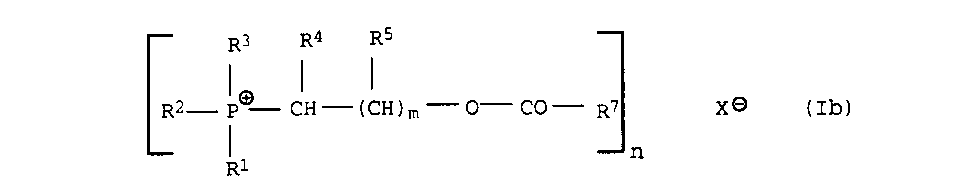 in der die Variablen R¹ bis R⁵, R⁷, m, n und X^{⊖} die oben genannten Bedeutungen haben, eingesetzt.

In einer weiteren bevorzugten Ausführungsform werden Phosphoniumsalze der allgemeinen Formel Ic 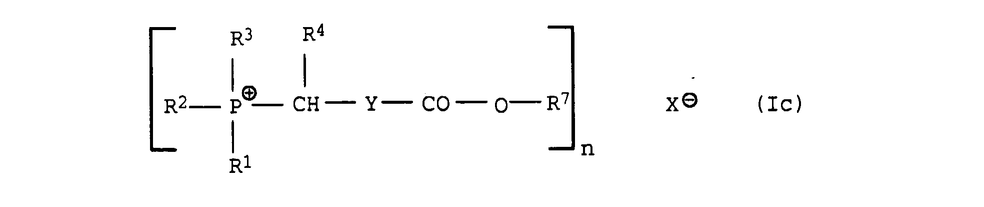 in der die Variabeln R¹ bis R⁴, R⁷, Y, n und X^{⊖} die oben genannten Bedeutungen haben, eingesetzt.

In einer weiteren bevorzugten Ausführungsform werden Phosphoniumsalze der allgemeinen Formel Id 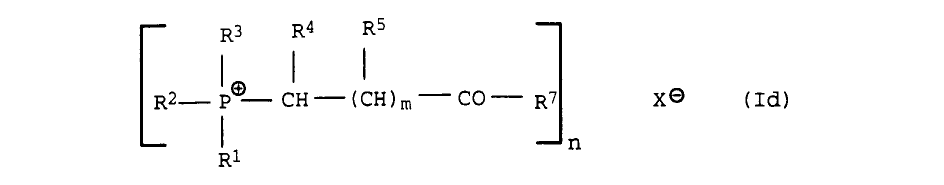 in der die Variablen R¹ bis R⁵, R⁷, m, n und X^{⊖} die oben genannten Bedeutungen haben, eingesetzt.

In einer weiteren bevorzugten Ausführungsform werden Phosphoniumsalze der allgemeinen Formel Ie 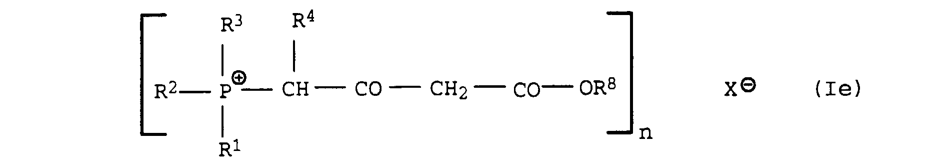 in der die Variablen R¹ bis R⁴, n und X^{⊖} die oben genannten Bedeutungen haben und R⁸ die gleiche Bedeutung wie R⁷ mit Ausnahme von Wasserstoff aufweist, eingesetzt.

In einer weiteren bevorzugten Ausführungsform werden Phosphoniumsalze der allgemeinen Formel If 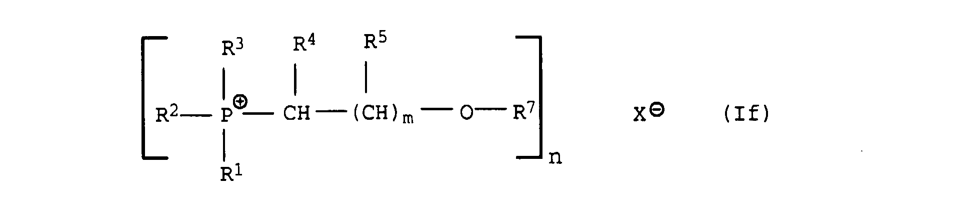 in der die Variablen R¹ bis R⁵, R⁷, m, n und X^{⊖} die oben genannten Bedeutungen haben, eingesetzt.

In einer weiteren bevorzugten Ausführungsform werden Phosphoniumsalze der allgemeinen Formel Ig 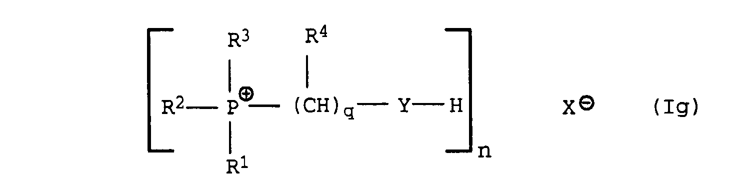 in der die Variablen R¹ bis R⁴, Y, n, q und X^{⊖} die oben genannten Bedeutungen haben, eingesetzt.

In einer weiteren bevorzugten Ausführungsform werden Phosphoniumsalze der allgemeinen Formel Ih 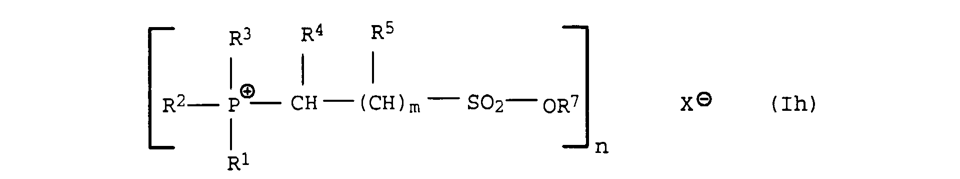 in der die Variablen R¹ bis R⁵, R⁷, m, n und X^{⊖} die oben genannten Bedeutungen haben, eingesetzt.

Die erfindungsgemäßen Phosphoniumsalze I lassen sich in vorteilhafter Weise durch Umsetzung der entsprechenden Vorstufe der allgemeinen Formel II 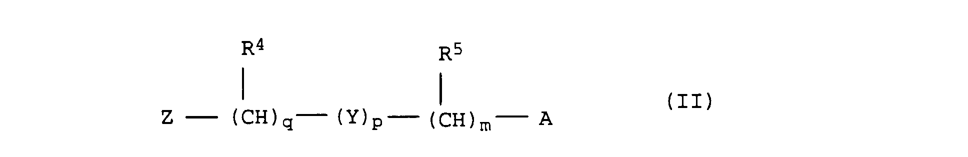 in der Z eine nucleofuge Abgangsgruppe, vorzugsweise Chlor oder Brom, darstellt, mit einem Phosphan der allgemeinen Formel III 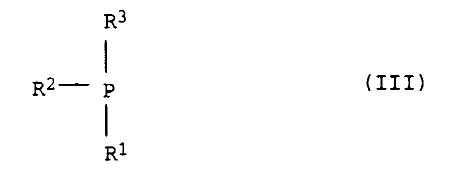 und gewünschtenfalls anschließenden Austausch des Anions Z^{⊖} gegen X^{⊖} herstellen.

Als Phosphane III eignen sich beispielsweise Trimethylphosphan, Triethylphosphan, Tri-n-butylphosphan, Tri-n-octylphosphan, Tris(2-ethylhexyl)phosphan, Triphenylphosphan, Tris(dimethylamino)phosphan, Tricyclohexylphosphan, Dimethylethylphosphan, Diethylmethylphosphan, Tris(2-cyanoethyl)phosphan, Triisobutylphosphan, Tri-n-octadecylphosphan, Tris(2-carboxylethyl)phosphan, Dibenzylmethylphosphan, Diethyl-n-octadecylphosphan, Triallylphosphan, Tri-n-decylphosphan oder Tri-n-hexylphosphan.

Die Umsetzung der Komponenten II und III wird zweckmäßgerweise in einem inerten organischen Lösungsmittel wie Toluol, Xylol, Petrolether, Ligroin, Cyclohexan, Aceton, Tetrahydrofuran, Dioxan, Methanol, Ethanol, iso-Propanol, Essigsäureethylester oder Benzoesäuremethylester oder in einer Mischung hieraus durchgeführt. Man kann die Umsetzung aber auch in Wasser oder in einem einphasigen oder zweiphasigen Gemisch aus Wasser und einem oder mehreren organischen Lösungsmitteln, vorzugsweise polaren organischen Lösungsmitteln, vornehmen. Bei Zweiphasengemischen kann ein üblicher Phasentransferkatalysator eingesetzt werden. Man arbeitet in der Regel bei Temperaturen von 40 bis 130°C, insbesondere bei 60 bis 110°C, und bei Normaldruck.

Da die Phosphoniumsalze I den Wirkungscharakter von sekundären Glanzbildnern haben, werden sie vorzugsweise in Kombination mit weiteren, normalerweise primären Glanzbildnern, gegebenenfalls auch mit einem oder mehreren weiteren sekundären Glanzbildnern verwendet. Als primäre Glanzbildner kommen beispielsweise Vinylsulfonsäure- oder Allylsulfonsäure-Natriumsalz, als sekundäre Glanzbildner beispielsweise 2-Butin-1,4-diol oder Propargylalkohol in Frage.

Die verwendeten wäßrig-sauren Nickelelektrolyt-Bäder enthalten ein oder meist mehrere Nickelsalze, z.B. Nickelsulfat und Nikkelchlorid, eine oder mehrere anorganische Säuren, vorzugsweise Borsäure und Schwefelsäure, als Glanzmittel die Verbindungen I allein oder vorzugsweise in Kombination mit weiteren üblichen Glanzmitteln sowie gegebenenfalls weitere übliche Hilfsmittel und Zusätze in den hierfür üblichen Konzentrationen, z.B. Netzmittel und Porenverhütungsmittel. Gebräuchlich wäßrig-saure Nickelelektrolyte ("Watts-Elektrolyte") haben die folgende Grundzusammensetzung:

200 bis 350 g/l NiSO₄ · 7 H₂O

30 bis 150 g/l NiCl₂ · 6 H₂O

30 bis 50 g/l H₃BO₃.

Der pH-Wert der Elektrolyt-Bäder liegt üblicherweise zwischen 3 und 6, vorzugsweise zwischen 4 und 5. Zur Einstellung dieses pH-Wertes dient zweckmäßigerweise eine starke Mineralsäure, vorzugsweise Schwefelsäure.

Die Verbindungen I liegen in den Elektrolyt-Bädern in niedrigen Konzentrationen, in der Regel zwischen 0,01 und 0,5 g/l, vorzugsweise zwischen 0,025 und 0,3 g/l, vor. Die Konzentrationen weiterer üblicher Glanzmittel liegen normalerweise im Bereich von jeweils 0,1 bis 10 g/l, insbesondere 0,1 bis 2,0 g/l.

Mit den beschriebenen Nickelelektrolyt-Bädern können vor allem Nickelüberzüge auf Formteilen aus Stahl, daneben aber auch auf Formteilen aus anderen Materialien, beispielsweise Messing, die wie üblich vorbehandelt worden sind, galvanisch erzeugt werden. Hierzu arbeitet man in der Regel bei Temperaturen von 30 bis 80°C, vorzugsweise 40 bis 60°C.

Die erfindungsgemäß verwendeten Verbindungen I zeichnen sich durch eine außerordentlich hohe Glanzbildung aus. Man erreicht mit ihnen in der Regel einen stärkeren Glanz als mit den üblichen Glanzbildnern und das meist bei deutlich niedrigerer Dosierung in den Nickelelektrolyt-Bädern.

### Herstellungsbeispiele

### Beispiel 1

### Herstellung von Triphenylphosphoniumessigsäurebenzylester-chlorid

23,6 g (0,1 mol) Triphenylphosphan wurden in 70 ml Toluol suspendiert. Dazu tropfte man 18,5 g (0,1 mol) Chloressigsäurebenzylester und erhitzte zwei Stunden zum Sieden. Nach Abkühlen auf Raumtemperatur wurde das ausgefallene Produkt abfiltriert und mit Diethylether gewaschen. Nach Trocknen erhielt man 40,8 g (entsprechend einer Ausbeute von 90 %) der Titelverbindung in Form von farblosen Kristallen. Die Reinheit des Produktes lag bei über 99 %.

### Beispiel 2

### Herstellung von 3-(Triphenylphosphonium)propyl-methylketon-chlorid

Die Titelverbindung wurde analog zu Beispiel 1 aus Triphenylphosphan und 3-Chlorpropyl-methylketon in einer Ausbeute von 82 % hergestellt.

### Beispiel 3

### Herstellung von 4- (Triphenylphosphonium)buttersäure-chlorid

Die Titelverbindung wurde analog Beispiel 1 aus Triphenylphosphan und 4-Chlorbuttersäure in einer Ausbeute von 78 % hergestellt.

### Beispiel 4

### Herstellung von 4-(Triphenylphosphonium)acetessigsäuremethylester-chlorid

Die Titelverbindung wurde analog Beispiel 1 aus Triphenylphosphan und 4-Chloracetessigsäuremethylester in einer Ausbeute von 84 % hergestellt.

### Beispiel 5

### Herstellung von 5-(Triphenylphosphonium)valeriansäureethylesterbromid

Die Titelverbindung wurde analog Beispiel 1 aus Triphenylphosphan und 5-Bromvaleriansäureethylester in einer Ausbeute von 74 % hergestellt.

### Beispiel 6

### Herstellung von 5-(Triphenylphosphonium)valeriansäure-bromid

Die Titelverbindung wurde analog Beispiel 1 aus Triphenylphosphan und 5-Bromvaleriansäure in einer Ausbeute von 79 % hergestellt.

### Beispiel 7

### Herstellung von Triphenylphosphoniumallyl-chlorid

Die Titelverbindung wurde analog Beispiel 1 aus Triphenylphosphan und Allylchlorid in einer Ausbeute von 89 % hergestellt.

### Anwendungsbeispiele

Die gemäß den Beispielen 1 bis 7 hergestellten Produkte wurden als Glanzmittel in schwach sauren galvanischen Bädern zur Abscheidung von Nickel eingesetzt.

Der verwendete wäßrige Nickelelektrolyt hatte folgende Zusammensetzung:

300 g/l NiSO₄ · 7 H₂O

60 g/l NiCl₂ · 6 H₂O

45 g/l H₃BO₃

2 g/l Saccharin 0,8 g/l Vinylsulfonsäure-Natriumsalz
x g/l Glanzbildner gemäß Tabelle
0,5 g/l eines Fettalkoholderivates der Formel C₁₂H₂₅/C₁₄H₂₉-O-(CH₂CH₂O)₂-SO₃Na als Netzmittel

Der pH-Wert des Elektrolyten wurde mit Schwefelsäure auf 4,2 eingestellt.

Es wurden Messingbleche verwendet, die vor der Beschichtung mit Nickel in einem alkalischen Elektrolyten nach den üblichen Methoden kathodisch entfettet wurden. Die Nickelabscheidung erfolgte in einer 250 ml-Hull-Zelle bei 55°C und einer Stromstärke von 2A während eines Zeitraumes von 10 Minuten. Anschließend wurden die Bleche mit Wasser gespült und mit Preßluft getrocknet.

Die folgende Tabelle zeigt die Ergebnisse dieser Versuche. Man erkennt, daß mit den erfindungsgemäßen Glanzbildnern ein stärkerer Glanz erzielt wurde als mit den Glanzbildnern des Standes der Technik, und das zum Teil bei deutlich niedrigerer Dosierung in den Nickelelektrolyt-Bädern.

**Tabelle**

| Prüfergebnisse der galvanischen Nickelabscheidung | | | |
|---|---|---|---|
| Beispiel Nr. | Glanzbildner | Konzentration x [g/l] | Glanz [Note] |
| 8 | aus Beispiel Nr. 1 | 0,1 | 5 |
| 9 | aus Beispiel Nr. 2 | 0,05 | 5 |
| 10 | aus Beispiel Nr. 3 | 0,2 | 5 |
| 11 | aus Beispiel Nr. 4 | 0,05 | 5 |
| 12 | aus Beispiel Nr. 5 | 0,05 | 5 |
| 13 | aus Beispiel Nr. 6 | 0,3 | 5 |
| 14 | aus Beispiel Nr. 7 | 0,0025 | 5 |
| zum Vergleich | | | |
| A | 2-Pyridinium-1-sulfatoethan | 0,3 | 4 - 5 |
| B | 2-Pyridinium-propylsulfonat | 0,3 | 4 - 5 |

Benotungsschema für den Glanz:
5 = hervorragend (perfekter Spiegelglanz) 4 = gut (nahezu Spiegelglanz) 3 = mäßig 2 = schlecht 1 = kein Glanz
Die Vergleichsverbindung A ist aus (2) bekannt.

## Patentansprüche

1. Verfahren zur Herstellung vernickelter Formteile durch galvanisches Abscheiden von Nickel aus wäßrig-sauren Bädern, die als wesentliche Bestandteile ein oder mehrere Nickelsalze, eine oder mehrere anorganische Säuren und ein oder mehrere Glanzmittel ernthalten, dadurch gekennzeichnet, daß man als Glanzmittel Phosphoniumsalze der allgemeinen Formel I 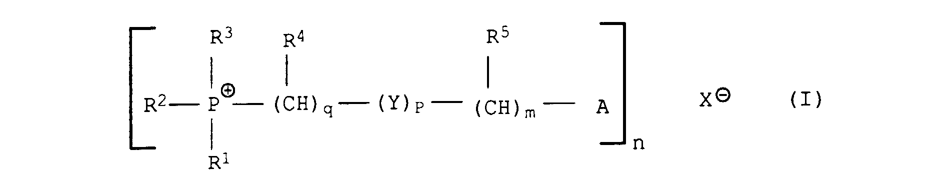 in der
R¹ bis R³ C₁- bis C₁₈-Alkyl, welches durch Carboxylgruppen, C₁- bis C₄-Alkoxycarbonylgruppen oder Cyanogruppen substituiert sein kann, C₂- bis C₁₂-Alkenyl, C₂- bis C₁₂-Alkinyl, C₅- bis C₈-Cycloalkyl, C₇- bis C₁₂-Phenylalkyl, Phenyl, welches durch ein oder zwei C₁- bis C₄-Alkylreste, C₁- bis C₄-Alkoxyreste, Halogenatome, Hydroxylgruppen, Phenylreste oder C₁- bis C₄-Alkoxycarbonylgruppen substituiert sein kann, oder Mono- oder Di(C₁- bis C₄-alkyl)amino bedeuten,
R⁴ und R⁵ für Wasserstoff oder C₁- bis C₄-Alkyl stehen,
A Wasserstoff oder eine Gruppierung der Formel -CO-H, -CO-R⁶, -CO-OH, -CO-OR⁶, -CO-CH₂-CO-OR⁶, -O-CO-H, -O-CO-R⁶, -OR⁶, -SO₂-R⁶, -SO₂-OH, -SO₂-OR⁶, -PO(OH)₂, -PO(OH)(OR⁶), -PO(OR⁶)₂, -OPO(OH)₂, -OPO(OH)(OR⁶) oder -OPO(OR⁶)₂ bezeichnet,
wobei
R⁶ C₁- bis C₁₂-Alkyl, C₂- bis C₁₂-Alkenyl, C₂- bis C₁₂-Alkinyl, C₅- bis C₈-Cycloalkyl, C₇- bis C₁₂-Phenylalkyl oder Phenyl, welches durch ein oder zwei C₁- bis C₄-Alkylreste, C₁- bis C₄-Alkoxyreste, Halogenatome, Hydroxylgruppen, Phenylreste oder C₁- bis C₄-Alkoxycarbonylgruppen substituiert sein kann, bedeutet,
Y die Gruppierung -CH=CH- oder -C≡C- bezeichnet,
m für eine Zahl von 0 bis 10,
n für eine Zahl von 1 bis 4,
p für 0 oder 1 und
q für eine Zahl von 0 bis 10 stehen und
X^{⊖} ein n-wertiges anorganisches oder organisches Anion, welches die Wasserlöslichkeit fördert, bezeichnet,
einsetzt.

2. Verfahren nach Anspruch 1 ,dadurch gekennzeichnet, daß die Variablen R¹ bis R³ C₁- bis C₄-Alkyl oder Phenyl, welches durch ein oder zwei C₁- bis C₄-Alkylreste substituiert sein kann, bedeuten.

3. Verfahren nach Anspruch 1 oder 2, dadurch gekennzeichnet, daß man Phosphoniumsalze der allgemeinen Formel Ia 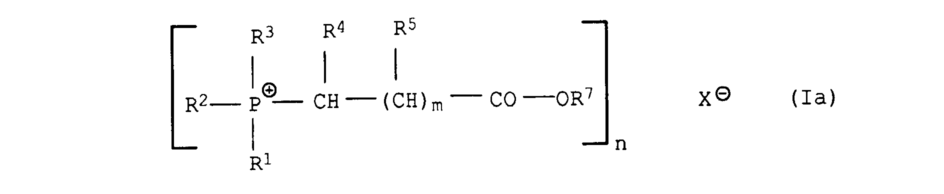 in der die Variablen R¹ bis R⁵, m, n und X^{⊖} die oben genannten Bedeutungen haben und R⁷ Wasserstoff, C₁- bis C₁₂-Alkyl, C₂- bis C₁₂-Alkenyl, C₂- bis C₁₂-Alkinyl, C₅- bis C₈-Cycloalkyl, C₇- bis C₁₂-Phenylalkyl oder Phenyl, welches durch ein oder zwei C₁- bis C₄-Alkylreste substituiert sein kann, bedeutet, einsetzt.

4. Verfahren nach Anspruch 1 oder 2, dadurch gekennzeichnet, daß man Phosphoniumsalze der allgemeinen Formel Ib 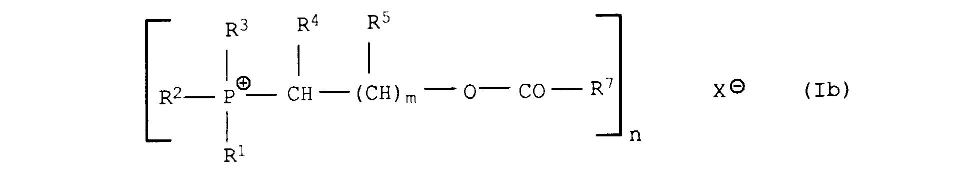 in der die Variablen R¹ bis R⁵, R⁷, m, n und X^{⊖} die oben genannten Bedeutungen haben, einsetzt.

5. Verfahren nach Anspruch 1 oder 2, dadurch gekennzeichnet, daß man Phosphoniumsalze der allgemeinen Formel Ic 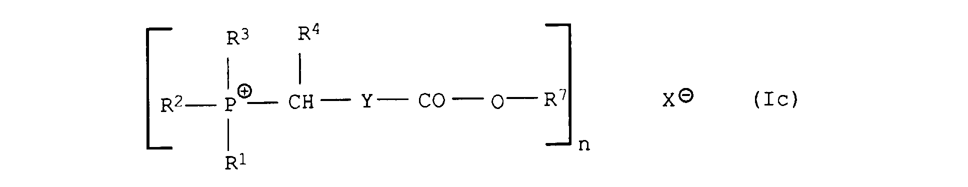 in der die Variabeln R¹ bis R⁴, R⁷, Y, n und X^{⊖} die oben genannten Bedeutungen haben, einsetzt.

6. Verfahren nach Anspruch 1 oder 2, dadurch gekennzeichnet, daß man Phosphoniumsalze der allgemeinen Formel Id 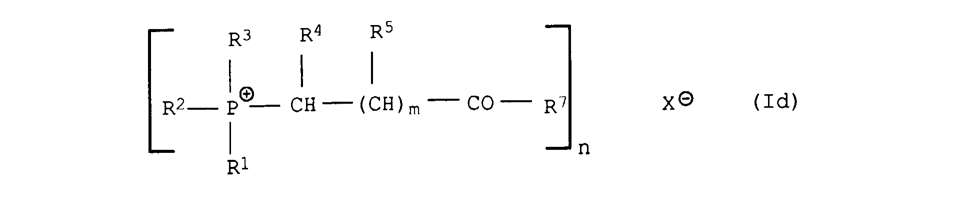 in der die Variablen R¹ bis R⁵, R⁷, m, n und X^{⊖} die oben genannten Bedeutungen haben, einsetzt.

7. Verfahren nach Anspruch 1 oder 2, dadurch gekennzeichnet, daß man Phosphoniumsalze der allgemeinen Formel Ie 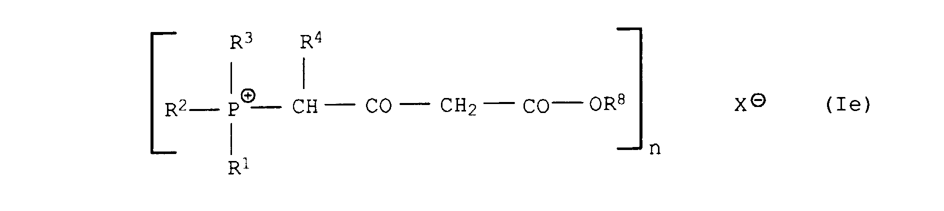 in der die Variablen R¹ bis R⁴, n und X^{⊖} die oben genannten Bedeutungen haben und R⁸ die gleiche Bedeutung wie R⁷ mit Ausnahme von Wasserstoff aufweist.

8. Verfahren nach Anspruch 1 oder 2, dadurch gekennzeichnet, daß man Phosphoniumsalze der allgemeinen Formel If 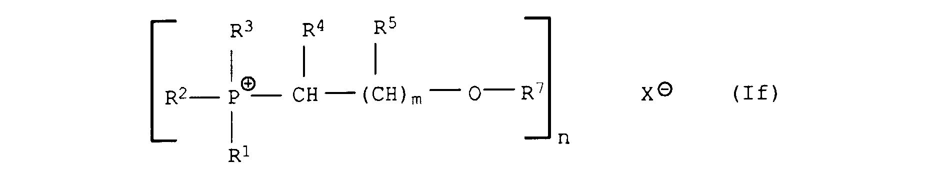 in der die Variablen R¹ bis R⁵, R⁷, m, n und X^{⊖} die oben genannten Bedeutungen haben, einsetzt.

9. Verfahren nach Anspruch 1 oder 2, dadurch gekennzeichnet, daß man Phosphoniumsalze der allgemeinen Formel Ig 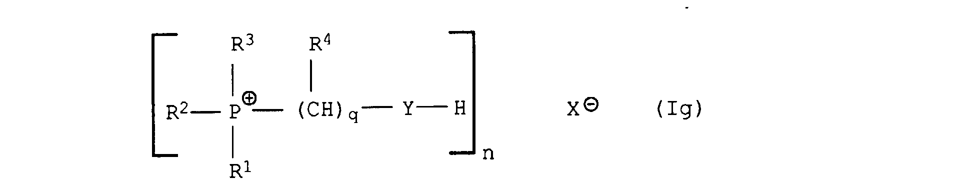 in der die Variablen R¹ bis R⁴, Y, n, q und X^{⊖} die oben genannten Bedeutungen haben, einsetzt.

10. Verfahren nach Anspruch 1 oder 2, dadurch gekennzeichnet, daß man Phosphoniumsalze der allgemeinen Formel Ih 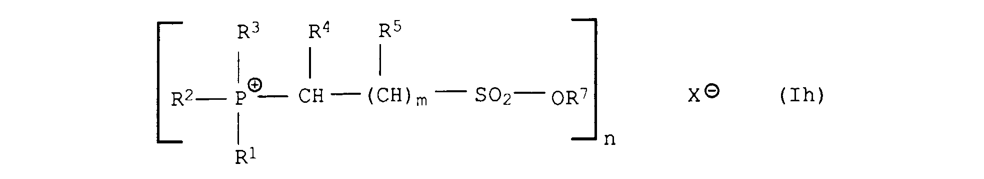 in der die Variablen R¹ bis R⁵, R⁷, m, n und X^{⊖} die oben genannten Bedeutungen haben, einsetzt.

11. Verfahren nach den Ansprüchen 1 bis 10, dadurch gekennzeichnet, daß man neben den Phosphoniumsalzen I mindestens ein weiteres Glanzmittel verwendet.

## Claims

1. A process for producing nickelized shaped articles by electrodeposition of nickel from aqueous acidic baths including as essential constituents one or more nickel salts, one or more inorganic acids and one or more brighteners, which comprises using brighteners comprising phosphonium salts of the general formula I 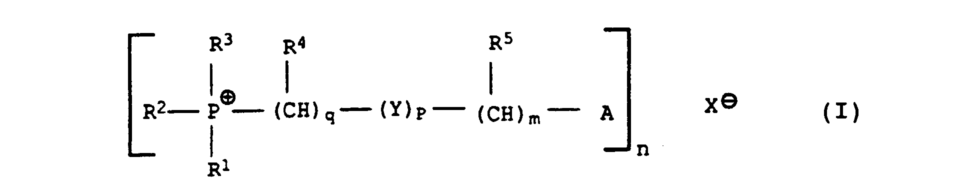 where
R¹ to R³ are each C₁-C₁₈-alkyl, which may be carboxyl-, C₁-C₄-alkoxycarbonyl- or cyano-substituted, C₂-C₁₂-alkenyl, C₂-C₁₂-alkynyl, C₅-C₈-cycloalkyl, C₇-C₁₂-phenylalkyl, phenyl, which may be substituted by one or two substituents selected from the group consisting of C₁-C₄-alkyl, C₁-C₄-alkoxy, halogen, hydroxyl, phenyl and C₁-C₄-alkoxycarbonyl, or mono- or di(C₁-C₄-alkyl)amino,
R⁴ and R⁵ are each hydrogen or C₁-C₄-alkyl,
A is hydrogen or a group of the formula -CO-H, -CO-R⁶, -CO-OH, -CO-OR⁶, -CO-CH₂-CO-OR⁶, -O-CO--H, -O-CO-R⁶, -OR⁶, -SO₂-R⁶, -SO₂-OH, -SO₂-OR⁶, -PO(OH)₂, -PO(OH)(OR⁶), -PO(OR⁶)₂, -OPO(OH)₂, -OPO(OH)(OR⁶) or -OPO(OR⁶)₂, where
R⁶ is C₁-C₁₂-alkyl, C₂-C₁₂-alkenyl, C₂-C₁₂-alkynyl, C₅-C₈-cycloalkyl, C₇-C₁₂-phenylalkyl or phenyl, which may be substituted by one or two substituents selected from the group consisting of C₁-C₄-alkyl, C₁-C₄-alkoxy, halogen, hydroxyl, phenyl and C₁-C₄-alkoxycarbonyl,
Y is -CH=CH- or -C≡C-,
m is from 0 to 10,
n is from 1 to 4,
p is 0 or 1,
q is from 0 to 10, and
X^{⊖} is an n-valent inorganic or organic anion that promotes solubility in water.

2. A process as claimed in claim 1, wherein R¹ to R³ are each C₁-C₄-alkyl or unsubstituted or C₁-C₄-alkylmonosubstituted or -disubstituted phenyl.

3. A process as claimed in claim 1, wherein the phosphonium salts used have the general formula Ia 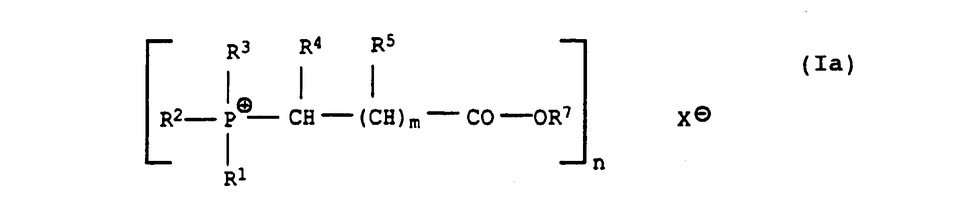 wherein R¹ to R⁵, m, n and X^{⊖} are each as defined above and R⁷ is hydrogen, C₁-C₁₂-alkyl, C₂-C₁₂-alkenyl, C₂-C₁₂-alkynyl, C₅-C₈-cycloalkyl, C₇-C₁₂-phenylalkyl or unsubstituted, C₁-C₄-alkyl-monosubstituted or -disubstituted phenyl.

4. A process as claimed in claim 1, wherein the phosphonium salts used have the general formula Ib 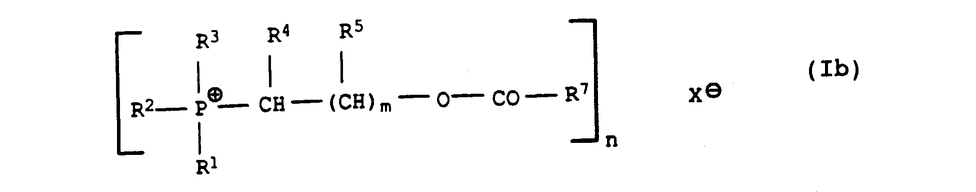 wherein R¹ to R⁵, R⁷, m, n and X^{⊖} are each as defined above.

5. A process as claimed in claim 1, wherein the phosphonium salts used have the general formula Ic 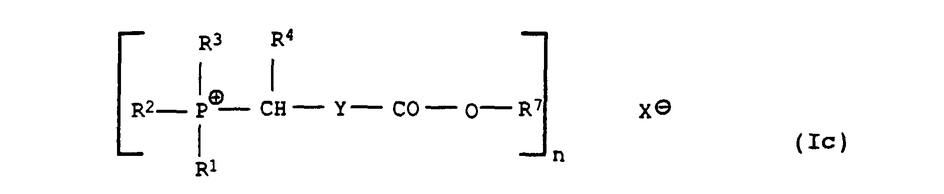 wherein R¹ to R⁴, R⁷, Y, n and X^{⊖} are each as defined above.

6. A process as claimed in claim 1, wherein the phosphonium salts used have the general formula Id 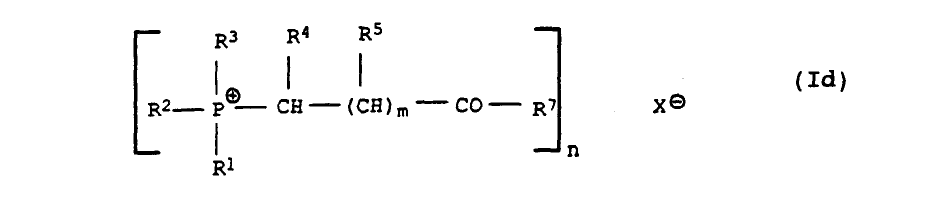 wherein R¹ to R⁵, R⁷, m, n and X^{⊖} are each as defined above.

7. A process as claimed in claim 1, wherein the phosphonium salts used have the general formula Ie 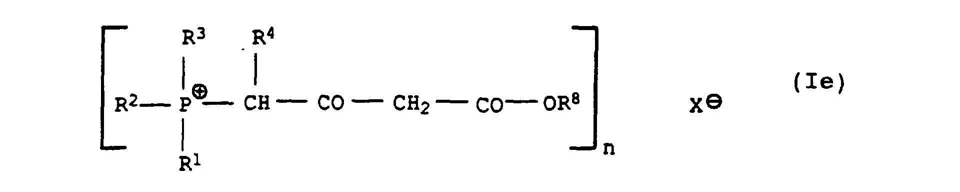 wherein R¹ to R⁴, n and X^{⊖} are each as defined above and R⁸ has the same meanings as R⁷ with the exception of hydrogen.

8. A process as claimed in claim 1 wherein the phosphonium salts used have the general formula If 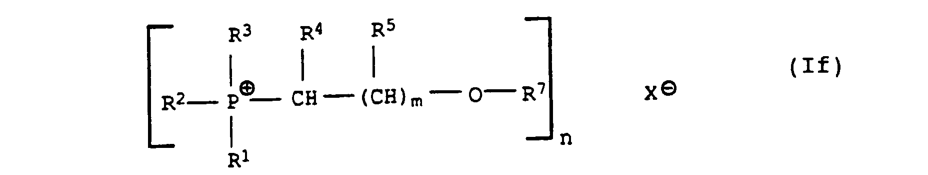 wherein R¹ to R⁵, R⁷, m, n and X^{⊖} are each as defined above.

9. A process as claimed in claim 1, wherein the phosphonium salts used have the general formula Ig 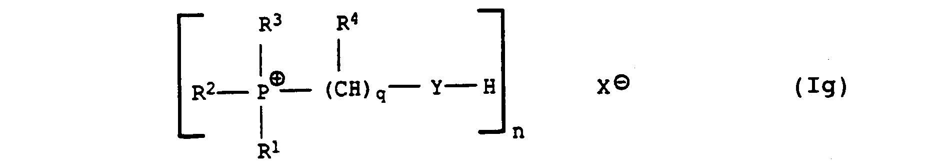 wherein R¹ to R⁴, Y, n, q and X^{⊖} are each as defined above.

10. A process as claimed in claim 1, wherein the phosphonium salts used have the general formula Ih 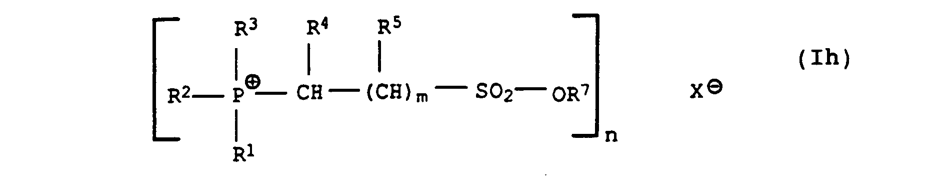 wherein R¹ to R⁵, R⁷, m, n and X^{⊖} are each as defined above.

11. A process as claimed in claim 1, wherein as well as the phosphonium salts I at least one further brightener is used.

## Revendications

1. Procédé de fabrication d'articles moulés nickelés par dépôt galvanique de nickel à partir de bains acides aqueux qui contiennent, en tant que constituants essentiels, un ou plusieurs sels de nickel, un ou plusieurs acides inorganiques et un ou plusieurs brillanteurs, caractérisé en ce que l'on utilise, comme brillanteurs, des sels de phosphonium de formule générale I 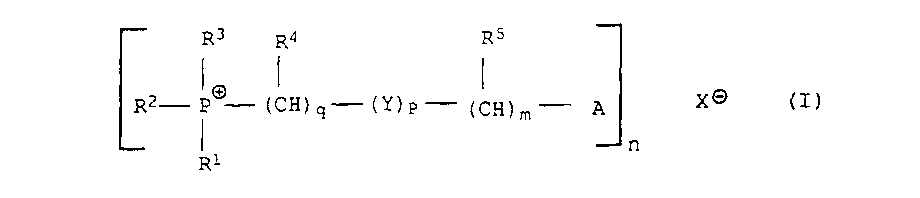 dans laquelle
R¹ à R³ représentent chacun un reste alkyle en C₁-C₁₈ qui peut être substitué par des groupements carboxyle, des groupements (alcoxy en C₁-C₄)carbonyle ou des groupements cyano, un reste alcényle en C₂-C₁₂, alcynyle en C₂-C₁₂, cycloalkyle en C₅-C₈, phénylalkyle en C₇-C₁₂, phényle qui peut etre substitué par un ou deux groupements alkyle en C₁-C₄, alcoxy en C₁-C₄, atomes d'halogène, groupements hydroxy, phényle ou (alcoxy en C₁-C₄)carbonyle, ou un reste mono- ou di(alkyl en C₁-C₄)amino,
R⁴ et R⁵ sont mis pour des atomes d'hydrogène ou des restes alkyle en C₁-C₄,
A représente un atome d'hydrogène ou un groupement de formule -CO-H, -CO-R⁶, -CO-OH, -CO-OR⁶, -CO-CH₂-CO-OR⁶, -O-CO-H, -O-CO-R⁶, -OR⁶, -SO₂-R⁶, -SO₂-OH, -SO₂-OR⁶, -PO(OH)₂, -PO(OH)(OR⁶), -PO(OR⁶)₂, -OPO(OH)₂, -OPO(OH)(OR⁶) ou -OPO(OR⁶)₂,
R⁶ représentant un reste alkyle en C₁-C₁₂, alcényle en C₂-C₁₂, alcynyle en C₂-C₁₂, cycloalkyle en C₅-C₈, phénylalkyle en C₇-C₁₂ ou phényle qui peut être substitué par un ou deux groupements alkyle en C₁-C₄, alcoxy en C₁-C₄, atomes d'halogène, groupements hydroxy, phényle ou (alcoxy en C₁-C₄)carbonyle,
Y représente le groupement -CH=CH- ou -C≡C-,
m est mis pour un nombre de 0 à 10,
n est mis pour un nombre de 1 à 4,
p est mis pour 0 ou 1 et
q est mis pour un nombre de 0 à 10, et
X^{⊖} représente un anion inorganique ou organique à n valences qui favorise la solubilité dans l'eau.

2. Procédé selon la revendication 1, caractérisé en ce que les variables R¹ à R³ représentent chacune un reste alkyle en C₁-C₄ ou phényle qui peut être substitué par un ou deux groupements alkyle en C₁-C₄.

3. Procédé selon la revendication 1 ou 2, caractérisé en ce que l'on utilise des sels de phosphonium de formule générale Ia 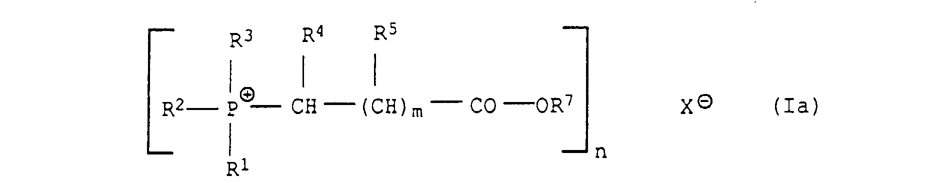 dans laquelle les variables R¹ à R⁵, m, n et X^{⊖} ont les significations données précédemment et R⁷ représente un atome d'hydrogène, un reste alkyle en C₁-C₁₂, alcényle en C₂-C₁₂, alcynyle en C₂-C₁₂, cycloalkyle en C₅-C₈, phénylalkyle en C₇-C₁₂ ou phényle qui peut être substitué par un ou deux groupements alkyle en C₁-C₄.

4. Procédé selon la revendication 1 ou 2, caractérisé en ce que l'on utilise des sels de phosphonium de formule générale Ib 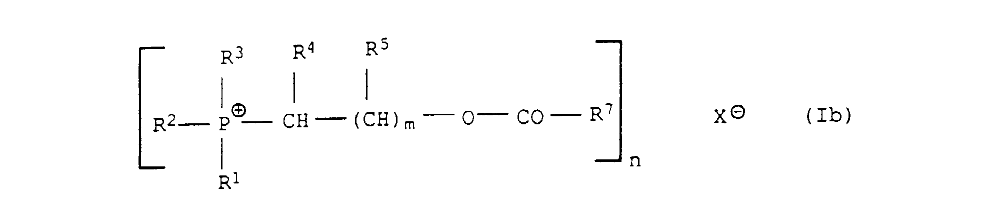 dans laquelle les variables R¹ à R⁵, R⁷, m, n et X^{⊖} ont les significations données précédemment.

5. Procédé selon la revendication 1 ou 2, caractérisé en ce que l'on utilise des sels de phosphonium de formule générale Ic 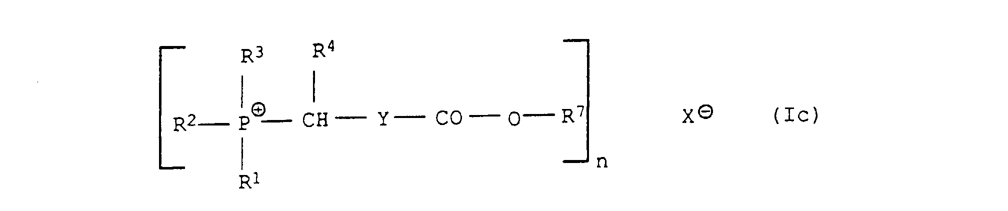 dans laquelle les variables R¹ à R⁴, R⁷, Y, n et X^{⊖} ont les significations données précédemment.

6. Procédé selon la revendication 1 ou 2, caractérisé en ce que l'on utilise des sels de phosphonium de formule générale Id 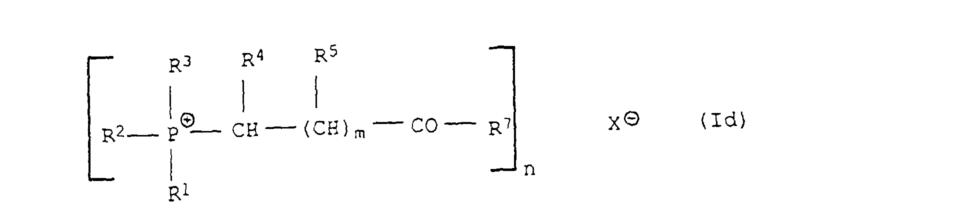 dans laquelle les variables R¹ à R⁵, R⁷, m, n et X^{⊖} ont les significations données précédemment.

7. Procédé selon la revendication 1 ou 2, caractérisé en ce que l'on utilise des sels de phosphonium de formule générale Ie 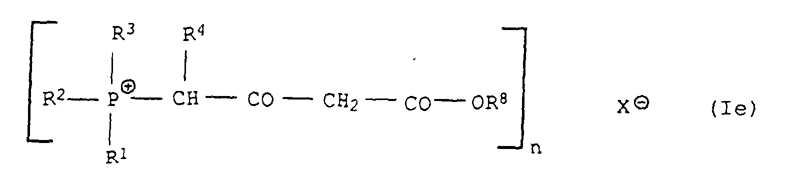 dans laquelle les variables R¹ à R⁴, n et X^{⊖} ont les significations données précédemment et R⁸ a la même signification que R⁷ à l'exception d'un atome d'hydrogène.

8. Procédé selon la revendication 1 ou 2, caractérisé en ce que l'on utilise des sels de phosphonium de formule générale If 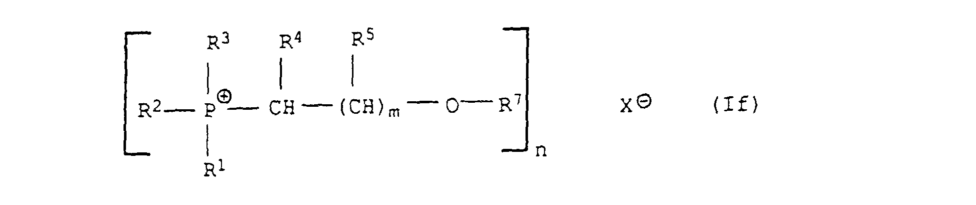 dans laquelle les variables R¹ à R⁵, R⁷, m, n et X^{⊖} ont les significations données précédemment.

9. Procédé selon la revendication 1 ou 2, caractérisé en ce que l'on utilise des sels de phosphonium de formule générale Ig 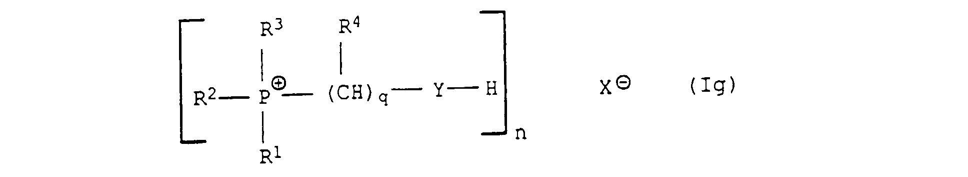 dans laquelle les variables R¹ à R⁴, Y, n, q et X^{⊖} ont les significations données précédemment.

10. Procédé selon la revendication 1 ou 2, caractérisé en ce que i'on utilise des sels de phosphonium de formule générale Ih 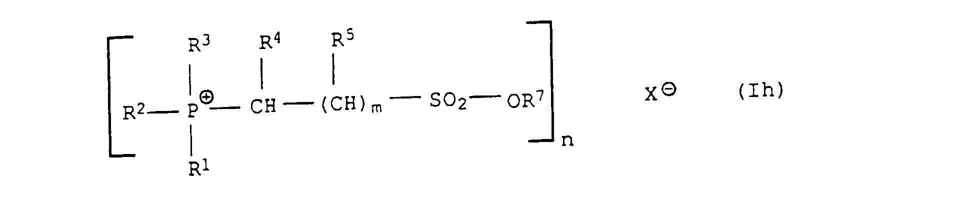 dans laquelle les variables R¹ à R⁵, R⁷, m, n et X^{⊖} ont les significations données précédemment .

11. Procédé selon l'une quelconque des revendications 1 à 10, caractérisé en ce qu'en plus des sels de phosphonium I, on utilise au moins un autre brillanteur.
